# EUROPÄISCHE PATENTSCHRIFT

(11) **EP 0 755 958 B1**
(45) Veröffentlichungstag und Bekanntmachung des Hinweises auf die Patenterteilung: **27.11.2002**
(21) Anmeldenummer: 96111238.0
(22) Anmeldetag: 12.07.1996
(51) Int. Cl.: C08G 73/02, C08L 79/02, C09D 179/02, C08G 18/64

(54) **Polyamine und ihre Verwendung in Lacken und Beschichtungen**
Polyamines and their use as lacques and coatings
Polyamines et leur utilisation comme laques et revêtements

(30) Priorität: 25.07.1995 DE 19527102
(43) Veröffentlichungstag der Anmeldung: 29.01.1997
(73) Patentinhaber: BAYER AG, 51368 Leverkusen (DE)
(72) Erfinder: Wamprecht, Christian, Dr., 41472 Neuss (DE); Engbert, Theodor, Dr., 50968 Köln (DE); Casselmann, Holger, Dr., 51469 Bergisch Gladbach (DE); Pedain, Josef, Dr., 51061 Köln (DE); Meixner, Jürgen, Dr., 47803 Krefeld (DE)

(56) Entgegenhaltungen:
- EP-A- 0 002 457
- EP-A- 0 159 363
- EP-A- 0 273 243
- EP-A- 0 731 121
- DE-B- 1 020 790
- US-A- 3 715 335

## Beschreibung

Die Erfindung betrifft neue Polyamine, die entweder durch Umesterung von Malein- bzw. Fumarsäuredi(cyclo)alkylestem mit Di-, Tri- oder Tetraolen oder durch Veresterung von Maleinsäureanhydrid, Malein- oder Fumarsäure mit Di-, Tri- oder Tetraolen und Monoalkoholen hergestellt werden, ein Verfahren zur Herstellung dieser Polyamine durch Umsetzung von ungesättigen Oligoestern mit im statistischen Mittel 2 bis 4 Doppelbindungen pro Molekül und gegebenenfalls weiteren ungesättigten Verbindungen mit niedermolekularen (cyclo)aliphatischen Diund/oder Polyaminen und gegebenenfalls weiteren Aminoverbindungen und die Verwendung der so hergestellten Polyamine in Kombination mit blockierten Polyisocyanaten als Bindemittel für Lacke und Beschichtungen.

Polyhydroxylverbindungen, z.B. Polyesterpolyole oder Polyacrylatpolyole werden als Reaktionspartner für blockierte Polyisocyanate in lagerstabilen Einkomponenten-Einbrennlacken verwendet. Dabei hat es nicht an Versuchen gefehlt, die Einbrenntemperatur solcher Lacke von ca. 170°C zu senken. Geeignete Katalysatoren, wie z.B. organische, Zinnverbindungen oder tertiäre Amine bewirken zwar die Senkung der Einbrenntemperatur auf ca. 150°C, was jedoch noch nicht ausreichend ist. Dabei ist auch von Nachteil, daß Katalysatoren bei überhöhten Temperaturen, die durch produktionsbedingte Überschreitungen der Einbrenntemperatur vorkommen können, auch die Rückreaktion katalysieren.

Durch Verwendung von neuen Blockierungsmitteln mit niedrigerer Abspalttemperatur in blockierten Polyisocyanaten (EP-A 159 117 Δ US-A 4 976 837) kann zwar die gewünschte niedrige Einbrenntemperatur von ca. 120 bis 140°C erreicht werden, die entsprechenden Bindemittelkombinationen haben jedoch meist eine nicht ausreichende Lagerstabilität.

Es bestand daher der Bedarf nach einer Reaktionskomponente für blockierte Polyisocyanate zur Herstellung von Einkomponentenpolyurethan-Einbrennlacken, die nicht nur eine hohe Reaktivität mit den blockierten Polyisocyanaten hat, sondern auch eine gute Lagerstabilität in Kombination mit blockierten Polyisocyanaten aufweist.

Aus der US-A 3 715 335 ist bekannt, ungesättigte Polyester mit Diaminen, die eine primäre und eine tertiäre Aminogruppe aufweisen, umzusetzen, gegebenenfalls diese Umsetzungsprodukte weiterhin mit Diaminen mit zwei primären Aminogruppen reagieren zu lassen und die Verfahrenprodukte an den tertiären Stickstoffatomen mit Epichlorhydrin zu quarternieren. Diese Endprodukte werden als Additive zur Papierherstellung und als Flockungshilfsmittel empfohlen.

Die EP-A 273 243 beschreibt sowohl Amino- und Amidgruppen enthaltende Polyesterpolyole, die durch Umsetzung von ungesättigten Polyesterpolyolen mit niedermolekularen Polyaminen mit zwei primären Aminogruppen hergestellt werden, als auch den Einsatz dieser Produkte zur Herstellung von Poly-(hamstoff)urethanen, die sich besonders als Klebstoffe eignen. Bei den zur Umsetzung mit den Diaminen zum Einsatz gelangenden Polyesterpolyolen handelt es sich um die bekannten höhermolekularen, ungesättigten Polyesterpolyole mit einer Hydroxylzahl im Bereich von 10 bis 500 mg KOH/g, die man durch Umsetzung von mehrwertigen, vorzugsweise zweiwertigen α,β-ungesättigten Carbonsäuren und/oder deren Anhydriden mit Polyolverbindungen erhält. Als besonders geeignet für Klebstoffanwendungen werden modifizierte Polyesterpolyole beschrieben, deren OH-Zahl zwischen 50 bis 500, vorzugsweise zwischen 150 bis 350 mg KOH/g liegt, und die einen Gesamtstickstoffgehalt von 1 bis 7 Gew.-%, bevorzugt 2 bis 5,5 Gew.-% aufweisen. Zur Modifizierung sollte ein Gewichtsverhältnis von Polyamin zu Polyesterpolyol von 0,5:100 bis 30:100, vorzugsweise 4:100 bis 15:100 eingehalten werden.

Es wurde nun gefunden, daß sich spezielle niedermolekulare Oligoester, die entweder durch Umesterung von Malein- bzw. Fumarsäuredi(cyclo)alkylestern mit Di-, Tri- oder Tetraolen oder durch Veresterung von Maleinsäureanhydrid, Maleinoder Fumarsäure mit Di-, Tri- oder Tetraolen und Monoalkoholen hergestellt werden, und im statistischen Mittel 2 bis 4 Doppelbindungen pro Molekül aufweisen, gegebenenfalls in Abmischung mit weiteren ungesättigten Verbindungen, besonders gut mit (cyclo)aliphatischen Diaminen im Sinne einer Michael-Addition (Addition von CH-aciden Verbindungen bzw. Aminen an viniloge Carbonylverbindungen) umsetzen lassen, wobei neue Polyamine entstehen, die mit blockierten Polyisocyanaten lagerstabile 1-Komponenten-Bindemittelkombinationen liefern, welche im Vergleich zu herkömmlichen 1-K-PUR-Bindemitteln eine wesentlich geringere Einbrenntemperatur zur Vernetzung benötigen .

Gegenstand der Erfindung sind Polyamine, die durch Umsetzung von
a) ungesättigten Oligoestern, die entweder durch Umesterung von Malein- bzw. Fumarsäuredi(cyclo)alkylestem mit Di-, Tri- oder Tetraolen oder durch Veresterung von Maleinsäureanhydrid, Malein- oder Fumarsäure mit Di-, Tri- oder Tetraolen und Monoalkoholen hergestellt werden, mit im statistischen Mittel 2 bis 4 Doppelbindungen pro Molekül,
b) gegebenenfalls weiteren als Michael-Akzeptor geeigneten ungesättigten Verbindungen mit im statistischen Mittel 1 bis 4 Doppelbindungen pro Molekül,
c) (cyclo)aliphatischen Diaminen mit zwei primären Aminogruppen und
d) gegebenenfalls weiteren als Michael-Donator geeigneten aminofunktionellen Verbindungen
hergestellt werden.

Gegenstand der Erfindung ist weiterhin ein Verfahren zur Herstellung von Polyaminen mit endständigen NH₂-Gruppen durch Umsetzung von ungesättigten Oligoestern, hergestellt entweder durch Umesterung von Malein- oder Fumarsäuredi(cyclo)alkylestern mit Di-, Tri- oder Tetraolen oder durch Veresterung von Maleinsäureanhydrid, Malein- oder Fumarsäure mit Di-, Tri- oder Tetraolen und Monoalkoholen, mit im statistischen Mittel 2 bis 4 Doppelbindungen pro Molekül und gegebenenfalls weiteren ungesättigten Verbindungen mit (cyclo)aliphatischen Diaminen und gegebenenfalls weiteren aminofunktionellen Verbindungen im Sinne einer Michael-Addition.

Gegenstand der Erfindung ist schließlich auch die Verwendung der erfindungsgemäßen Polyamine als Bindemittelkomponente A) in Lacken und Beschichtungsmitteln, insbesondere als Reaktionspartner für blockierte Polyisocyanate B) in Einkomponenten-Einbrennlacken sowie die dabei erhältlichen Lacke und Beschichtungsmittel.

Die erfindungsgemäßen Polyamine in der Bindemittelkomponente A) setzen sich aus folgenden Bestandteilen zusammen:
a) ungesättigten Oligoestern, die entweder durch Umesterung von Maleinund/oder Fumärsäuredi(cyclo)alkylestern mit Di-, Tri- und/oder Tetraolen oder durch Veresterung von Maleinsäureanhydrid, Malein- und/oder Fumarsäure mit Di-, Tri- und/oder Tetraolen und Monoalkoholen hergestellt werden und im statistischen Mittel 2 bis 4 Doppelbindungen pro Molekül aufweisen, die als Michael-Akzeptoren fungieren können,
b) gegebenenfalls weiteren ungesättigten Verbindungen, die als Michael-Akzeptor fungieren können,
c) (cyclo)aliphatischen Diaminen mit zwei primären Aminogruppen (NH₂), die als Michael-Donoren fungieren können und
d) gegebenenfalls weiteren aminofunktionellen Verbindungen, die als Michael-Donator fungieren können.

Bei den ungesättigten Oligoestern a) handelt es sich entweder um Umesterungsprodukte, die bei der Umesterung von Malein- und/oder Fumarsäuredi(cyclo)alkylestern mit Di-, Tri- und/oder Tetraolen entstehen, oder um Veresterungsprodukte von Maleinsäureanhydrid, Malein- und/oder Fumarsäure mit Di-, Tri- und/oder Tetraolen und Monoalkoholen. Die ungesättigten Oligoester a) weisen im statistischen Mittel 2 bis 4, vorzugsweise 2 bis 3 Doppelbindungen pro Molekül auf.

Für die Umesterung geeignete Malein- bzw. Fumarsäuredi(cyclo)alkylester weisen 1 bis 8 Kohlenstoffatome im (Cyclo)alkylrest auf, wie z.B. Maleinsäuredimethylester, Maleinsäurediethylester, Maleinsäuredi-n-propylester, Maleinsäurediisopropylester, Maleinsäuredi-n-butylester, Maleinsäurediisobutylester, Maleinsäuredi-n-hexylester, Maleinsäuredi-2-ethylhexylester, Maleinsäuredicyclohexylester und die entsprechenden Fumarsäurediester. Bevorzugt sind Maleinsäuredimethyl-, Maleinsäurediethyl- und Maleinsäuredi-n-butylester.

Für die Umesterung geeignete Di-, Tri- und/oder Tetraole sind lineare oder verzweigte gesättigte, gegebenenfalls Ethersauerstoffatome enthaltende, Alkohole wie z.B. Ethylenglykol, Propylenglykol-1,2 und -1,3, Butylenglykol-1,4, -1,3 und -2,3, Hexandiol-1,6, und -2,5, Octandiol-1,8, 2-Methyl-1,3-propandiol, 2-Ethyl-2-butyl-1,3-propandiol, Neopentylglykol, 1,4-Bis-hydroxymethylcyclohexan, Diethylenglykol, Triethylenglykol, Tetraethlenglykol, Polyethylenglykole bis Molekulargewicht ca. 1.000, vorzugsweise ca. 800, Glycerin, Trimethylolpropan und Pentaerythrit. Besonders bevorzugt ist der Einsatz von Ethylenglykol, Propylenglykol, Diethylenglykol, Polyethylenglykolen bis Molekulargewicht ca. 600, Butandiol-1,4, Hexandiol-1,6, Neopentylglykol, 1,4-Cyclohexandimethanol und Trimethylolpropan.

Bei der Umesterung werden pro Mol Malein- und/oder Fumarsäuredi(cyclo)-alkylester die Di-, Tri- und/oder Tetraole in solchen Mengen eingesetzt, daß auf jede OH-Gruppe der Alkoholkomponente ein Mol Malein- und/oder Fumarsäuredi(cyclo)alkylester entfällt.

Die Umesterung wird in Substanz ohne Lösungsmittel, bei Temperaturen von 80 bis 250°C, vorzugsweise 100 bis 220°C durchgeführt, wobei der entstehende Monoalkohol abdestilliert wird. Zweckmäßig werden dazu Umesterungskatalysatoren, beispielsweise Säuren, Basen oder organische Metallverbindungen, wie z.B. Zinn-II-dioctoat, verwendet. Die Umesterung verläuft in der Regel nahezu quantitativ.

Bei der Herstellung der speziellen ungesättigten Oligoester durch Veresterung von Maleinsäureanhydrid, Malein- und/oder Fumarsäure mit Di-, Tri- und/oder Tetraolen und Monoalkoholen ist Maleinsäureanhydrid als Carbonsäurekomponente bevorzugt.

Für die Veresterung geeignete Di-, Tri- und/oder Tetraole sind solche Verbindungen, wie sie zuvor schon bei der Umesterung genannt wurden.

Für die Veresterung werden Monoalkohole wie einwertige, aliphatische, cycloaliphatische oder araliphatische Alkohole mit 1 bis 18, vorzugsweise 1 bis 12 und besonders bevorzugt 1 bis 9 Kohlenstoffatomen, wie Methanol, Ethanol, 1- und 2-Propanol, 1- und 2-Butanol, Isobutanol, tert.-Butanol, 1-, 2- und 3-Pentanol, 2-und 3-Methyl-1-butanol, 2,2-Dimethylpropanol, 1-, 2- und 3-Hexanol, 4-Methyl-2-pentanol, 2-Ethyl-1-butanol, 2,2-Diethylpropanol, 1-Octanol, 2-Ethyl-1-hexanol, 1-Nonanol, 3,5,5-Trimethyl-1-hexanol, 1-Decanol, 1-Dodecanol, 1-Tetradecanol, 1-Hexadecanol, 1-Octadecanol, Cyclohexanol, 2-, 3- und 4-Methylcyclohexanol, Hydroxymethylcyclohexan, 3,3,5-Trimethylcyclohexanol, 4-tert.-Butylcyclohexanol und Benzylalkohol eingesetzt. Gemische derartiger Monoalkohole sowie entsprechende Ethersauerstoffatome enthaltende Monoalkohole können ebenfalls verwendet werden.

Die Veresterung erfolgt entweder in Substanz unter Wasserabspaltung bei Temperaturen von 80 bis 260°C, vorzugsweise 100 bis 240°C. Reaktionswasser wird gegebenenfalls im Vakuum oder Stickstoffstrom abdestilliert oder mit einem Schleppmittel wie Benzol, Toluol, Xylol, Isooctan oder Cyclohexan azeotrop entfernt. Auch hier können übliche Veresterungskatalysatoren, beispielsweise Säuren wie p-Toluolsulfonsäure und Schwefelsäure oder organische Metallverbindungen, wie z.B. Zinn-II-dioctoat eingesetzt werden.

Bei den zur Herstellung der erfindungsgemäßen Polyamine A) gegebenenfalls mitzuverwendenden weiteren ungesättigten Verbindungen b) handelt es sich um Verbindungen mit 1 bis 4, vorzugsweise 1 bis 3 und besonders bevorzugt 2 bis 3 Doppelbindungen pro Molekül, beispielsweise Ester der Acryl- und Methacrylsäure wie z.B. Methyl(meth)acrylat, Ethyl(meth)acrylat, n-Butyl(meth)acrylat, iso-Butyl(meth)acrylat, 2-Ethylhexyl(meth)acrylat, Cyclohexyl(meth)acrylat, Ethandioldi(meth)acrylat, Butandioldi(meth)acrylat, Hexandioldi(meth)acrylat, Trimethylolpropantri(meth)acrylat und Pentaerythrittetra(meth)acrylat oder Di(cyclo)-alkylester der Malein- oder Fumarsäure, wie sie z.B. für die zuvor beschriebene Umesterung zum Einsatz gelangen. Auch Veresterungsprodukte der Acrylund/oder Methacrylsäure mit bis zu 4 Sauerstoffatomen enthaltenden Etheralkoholen, wie z.B. Polyethylenglykole bis Molekulargewicht 1.000, sind als Komponente b) geeignet.

Bevorzugt sind di- und trifunktionelle ungesättigte Verbindungen, wie z.B. Ethandioldi(meth)acrylat, Butandioldi(meth)acrylat, Hexandioldi(meth)acrylat, Trimethylolpropantri(meth)acrylat und Veresterungsprodukte der Acryl- und/oder Methacrylsäure mit Ethersauerstoffatome aufweisenden Di- und Triolen, z.B. Polyethylenglykolen bis Molekulargewicht von ca. 800 und besonders bevorzugt Ethandioldiacrylat, Butandioldiacrylat, Hexandioldiacrylat, Trimethylolpropantriacrylat und Veresterungsprodukte der Acrylsäure mit Ethersauerstoffatome aufweisenden Di-und Triolen, wie z.B. Polyethylenglykolen bis zu einem Molekulargewicht von ca. 600.

Bei den (cyclo)aliphatischen Diaminen c) handelt es sich um Verbindungen mit zwei primären Aminogruppen mit der Formel (I)

NH₂-R-NH₂ (I),

in der R für einen C₂-C₂₄-aliphatischen oder C₃-C₂₄-cycloaliphatischen Rest steht.

Vorzugsweise steht R für einen aliphatischen Rest mit 2 bis 15 C-Atomen, cycloaliphatischen Rest mit 6 bis 12 C-Atomen, besonders bevorzugt für einen aliphatischen Rest mit 2 bis 10 C-Atomen und einen cycloaliphatischen Rest mit 6 Ringatomen.

Beispielhaft zu nennen sind Ethylendiamin, 1,2- und 1,3-Propylendiamin, 1,4-Diaminobutan, 1,6-Diaminohexan, 2,2,4- und 2,4,4-Trimethyl-1,6-diaminohexan, 1,4-Diaminocydohexan, 5-Amino-1-aminomethyl-1,3,3-trimethylcyclohexan (Isophorondiamin), Bis-(4-aminocyclohexyl)-methan, Bis-(4-amino-3-methylcylohexyl)-methan, 1-Amino-1-methyl-3(4)-aminomethylcyclohexan, Bis-(4-Amino-3,5-diethylcyclohexyl)-methan, Bis-aminomethyl-hexahydro-4,7-methano-indan, 2,3-, 2,4- und 2,6-Diamino-1-methylcyclohexan bzw. Gemische dieser Diamine.

Gegebenenfalls können weitere aminofunktionelle Verbindungen d) eingesetzt werden wie aliphatische, cycloaliphatische und/oder araliphatische Monoamine mit einer primären oder sekundären Aminogruppe wie beispielsweise Methylamin, Dimethylamin, Ethylamin, Diethylamin, 1-Aminopropan, Di-n-propylamin, 2-Aminopropan, Diisopropylamin, 1-Aminobutan, Di-n-butylamin, 2-Aminobutan, Isobutylamin, Diisobutylamin, 1-Aminohexan, Dodecylamin, Octadecylamin, Cyclohexylamin, Dicyclohexylamin und Benzylamin; aliphatische, cycloaliphatische und/oder heterocyclische Diamine mit einer primären, einer sekundären und gegebenenfalls einer tertiären Aminogruppe, wobei die sekundäre Aminogruppe auch Teil eines Ringsystems sein kann wie N-Methylethylendiamin, N-Methylpropylendiamin, N-(2-Aminoethyl)-piperazin und 3-Amino-1,2,4-triazol; um aliphatische Diamine mit zwei primären und mindestens einer sekundären Aminogruppe, wie z.B. Diethylentriamin, Triethylentetramin, Tetraethylenpentamin und Bis-(3-aminopropyl)-amin; alipathische, cycloaliphatische und/oder heterocyclische Diamine mit mindestens zwei sekundären Aminogruppen, wie z.B. N,N'-Dimethylethylendiamin, N,N'-Dimethyl-1,4-diaminocyclohexan und 2,5-Dimethylpiperazin.

Die erfindungsgemäßen Polyamine A) werden durch Umsetzung der ungesättigten Oligoester a), gegebenenfalls weiterer ungesättigter Verbindungen b) die als Michael-Akzeptor fungieren können, mit (cyclo)aliphatischen Diaminen c), die zwei primäre Aminogruppen enthalten und gegebenenfalls weiteren aminofunktionellen Verbindungen d), die als Michael-Donator fungieren können bei 20 bis 160°C, vorzugsweise 30 bis 140°C und besonders'bevorzugt bei 40 bis 120°C in Substanz oder bevorzugt in einem inerten organischen Lösungsmittel hergestellt.

Geeignete Lösungsmittel sind beispielsweise aromatische Kohlenwasserstoffe wie Toluol, Xylol, höhere Alkylbenzole oder Aromatengemischen wie ®Solvesso 100, 150 und 200 (Esso AG), Ester wie z.B. Ethylacetat, n-Butylacetat, Methylglykolacetat, Methoxypropylacetat, Ketone wie Methylethylketon oder Methylisobutylketon oder Gemische hiervon.

Die hergestellten Polyamine A) haben im statistischen Mittel mindestens eine, vorzugsweise mindestens 2 und besonders bevorzugt 2 bis 4 primäre Aminogruppen (NH₂), was durch geeignete Mengenverhältnisse der Ausgangskomponenten a) bis d) erreicht werden kann.

Bevorzugte Polyamine A) werden durch Umsetzung der Ausgangskomponenten a) bis c) hergestellt. Sie weisen im statistischen Mittel 1 bis 6, vorzugsweise 1 bis 4 und besonders bevorzugt 2 bis 4 primäre Aminogruppen (NH₂) und 3 bis 12, vorzugsweise 3 bis 10 und besonders bevorzugt 4 bis 10 sekundäre Aminogruppen (NH) pro Molekül auf. Dabei liegt der Gesamtstickstoffgehalt (N=14) bei 2,04 bis 17,41%, vorzugsweise 2,82 bis 13,63% und besonders bevorzugt 3,66 bis 12,36%. Der Gehalt an primären Aminogruppen (NH₂=16) liegt bei 0,39 bis 6,53%, vorzugsweise 0,7 bis 5,84% und besonders bevorzugt 1,39 bis 5,30% und der Gehalt an sekundären Aminogruppen (NH=15) liegt bei 1,82 bis 10,20%, vorzugsweise 2,01 bis 9,12% und besonders bevorzugt 2,61 bis 8,28%.

Zu den ebenfalls bevorzugten Polyaminen A) gehören Umsetzungsprodukte, die ausschließlich auf den Ausgangskomponenten a) und c) basieren. Sie weisen im statistischen Mittel 2 bis 6, vorzugsweise 2 bis 5 und besonders bevorzugt 2 bis 4 primäre Aminogruppen (NH₂) und 2 bis 12, vorzugsweise 2 bis 10 und besonders bevorzugt 2 bis 9 sekundäre Aminogruppen (NH) pro Molekül auf. Dabei liegt der Gesamtstickstoffgehalt (N=14) bei 1,92 bis 13,79%, vorzugsweise 3,11 bis 13,79% und besonders bevorzugt 3,94 bis 13,79%. Der Gehalt an primären Aminogruppen (NH₂) liegt bei 0,73 bis 7,88%, vorzugsweise 1,78 bis 7,88% und besonders bevorzugt 2,25 bis 7,88% und der Gehalt an sekundäre Aminogruppen (NH=15) liegt bei 1,37 bis 7,39%, vorzugsweise 1,76 bis 7,39% und besonders bevorzugt 2,11 bis 7,39%.

Die Reaktion der Komponenten a) bis d), a) bis c), a) und c) bzw. a), c) und d) wird gegebenenfalls in einem inerten organischen Lösungsmittel so lange durchgeführt bis der theoretische Feststoffgehalt nahezu oder vollständig erreicht ist.

Die Reihenfolge der Dosierung der Komponenten a) bis d) ist beliebig wählbar. Die Komponenten a) und b) bzw. c) und d) können auch als Mischung zudosiert werden. Bevorzugt werden die Komponenten a), b), c) oder d), bzw. die Komponenten a) und b) oder c) und d) zusammen vorgelegt und die restlichen Komponenten gleichzeitig oder nacheinander zudosiert

Die Umsetzung der Komponenten a) bis d); a) bis c); a) und c) bzw. a), c) und d) wird vorzugsweise in der Weise durchgeführt, daß die Komponente c) bzw. c) und d) gegebenenfalls in einem inerten Lösungsmittel vorgelegt und dann die Komponente a) bzw. a) und b) im Gemisch oder nacheinander bei der gewählten Reaktionstemperatur zudosiert wird. In einer bevorzugten Ausführungsform wird die Komponente c) in einem inerten Lösungsmittel vorgelegt, die Komponente b) anschließend bei der gewünschten Temperatur, die gegebenenfalls durch Kühlen konstant gehalten wird, zudosiert. Nach Reaktion der Komponenten b) und c), deren Vollständigkeit durch Festgehaltsbestimmung kontrolliert wird, erfolgt die Dosierung der Komponente a). Es wird dann so lange bei der gewählten Temperatur gerührt, bis der theoretische Festgehalt nahezu oder vollständig erreicht ist.

Werden nur die Komponenten a) und c) miteinander umgesetzt, ist in der Regel frei wählbar, welche Komponente gegebenenfalls in einem Lösungsmittel vorgelegt und welche zudosiert wird. Vorzugsweise wird die Komponente c) vorgelegt und die Komponente a) zudosiert.

Die durch das erfindungsgemäße Verfahren zugänglichen neuen Polyamine A) sind viskose oder feste, farblose bis gelbe Produkte, die in üblichen Lacklösemitteln, zu denen beispielsweise die zuvor genannten Lösungsmittel gehören, klar löslich sind.

Als Reaktionspartner der erfindungsgemäßen Polyamine A) zur Herstellung von vernetzten Lackierungen oder Beschichtungen sind blockierte Polyisocyanate B) auf Basis aromatischer, aliphatischer und cycloaliphatischer Polyisocyanate, wie z.B. 2,3-, 2,4- und 2,6-Diisocyanatotoluol, 4,4'- und 2,4'-Diisocyanatodiphenylmethan, 1,4-Diisocyanatobutan, 1,6-Diisocyanatohexan, 1-Isocyanato-5-isocyanatomethyl-3,3,5-trimethylcyclohexan (Isophorondiisocyanat), 2,3-, 2,4- und 2,6-Diisocyanato-1-methylcyclohexan, 1,4-Diisocyanatocyclohexan, 4,4'- und 2,4'-Diisocyanatodicyclohexylmethan, 1-Isocyanato-3(4)-isocyanatomethyl-1-methylcyclohexan bzw. deren Gemische.

Insbesondere daraus hergestellte chemische Modifizierungen mit vorzugsweise Biuretgruppen, Allophanatgruppen, Carbodiimidgruppen, Uretdionstrukturen und Isocyanuratstrukturen können nach reversibler Blockierung der noch freien Isocyanatgruppen als Vernetzerkomponente B) für die erfindungsgemäßen Polyamin A) eingesetzt werden. Solche Isocyanatgruppen aufweisende Basisverbindungen sind beispielsweise in den EP-A 0 003 505, DE-A 1 101 394, US-A 3 358 010, US-A 3 903 127, US-A 4 324 879, US-A 4 288 586, DE-A 3, 100 262, DE-A 3 100 263, DE-A 3 033 860 und DE-A 3 144 672 beschrieben.

Zur Herstellung der reversibel blockierten Polyisocyanatkomponente B) werden die Basis(poly)isocyanate oder Mischungen derselben, vorzugsweise mit Blockierungsmitteln wie z.B. Phenol, ε-Caprolactam, Butanonoxim, Acetonoxim, 3,5-Dimethylpyrazol, Triazol, Malonsäuredialkylestern, Acetessigsäureestern bzw. sek. Aminen wie Di-n-Butylamin oder Di-2-ethylhexylamin umgesetzt. Im Regelfall kann eine vollständige Blockierung der freien Isocyanatgruppen erreicht werden.

Die Blockierungsreaktion der freien Isocyanatgruppen mit ε-Caprolactam oder Butanonoxim erfolgt bei Temperaturen von 100 bis 130°C (z.B. DE-A 3 004 876). Dabei ist die Anwesenheit von Katalysatoren, z.B. Organozinnverbindungen oder bestimmte tertiäre Amine, wie z.B. Triethylamin, in Mengen zwischen 0,01 bis 0,1 Gew.-% bezogen auf das Gesamtgemisch, vorteilhaft.

Die Blockierungsreaktion mit Malonsäureestern bzw. Acetessigsäureestern geschieht in an sich bekannter Weise (z.B. DE-A 2 342 603 oder 2 550 156) mit Hilfe basischer Katalysatoren, wie z.B. Natriumphenolat, Natriummethylat oder andere Alkali-Alkoholate. Auch andere organische Alkali-Verbindungen, wie z.B. Natriummalonat kommen in Betracht. Die Katalysatoren werden in einer Menge von 0,1% bis 2%, bezogen auf das Gesamtgewicht der Reaktionskomponenten, eingesetzt. Die Einsatzmenge an Dialkylmalonat sollte mindestens 1 Mol pro Isocyanatäquivalent betragen: es ist jedoch zweckmäßig, einen 5- bis 20%igen Überschuß an Blockierungsmittel zu verwenden.

Grundsätzlich ist es auch möglich, ein zuvor beschriebenes, unblockiertes Polyisocyanat nur teilzublockieren, so daß beispielsweise 50 bis 95%, vorzugsweise 70 bis 95 % der Isocyanatgruppen in blockierter Form vorliegen und anschließend das teilblockierte Polyisocyanat mit einer Polyaminkomponente A) der vorstehend beanspruchten Art umzusetzen. Die Herstellung von erfindungsgemäßen Kombinationen der Komponenten A) und B) kann analog hierzu oder durch Abmischen der Einzelkomponenten erfolgen. Weiterhin kann man nicht blockierte Polyisocyanate oder Polyisocyanatgemische teilweise blockieren, so daß noch beispielsweise bis zu 30% der NCO-Gruppen in freier Form vorliegen.

Anschließend wird eine solche Menge der als Komponente A) geeigneten Polyamine hinzugefügt, daß nach der spontan ablaufenden Additionsreaktion zwischen den freien NCO-Gruppen und einem Teil der Aminogruppen des Polyamins ein Gemisch aus blockierten Polyisocyanaten und überschüssigem Polyamin A) vorliegt. Das Äquivalentverhältnis von blockierten NCO-Gruppen zu Aminogruppen liegt innerhalb des erfindungswesentlichen Bereichs von 0,5:1 bis 8:1.

Die Blockierungsreaktion kann mit oder ohne von gegenüber Polyisocyanaten inerten Lösungsmitteln erfolgen wie Ethylacetat, Butylacetat, Methoxypropylacetat, Methylglykolacetat, Ethylglykolacetat, Diethylenglykolmonomethyletheracetat, Methylethylketon, Methylisobutylketon, Toluol, Xylol sowie die in der Lackchemie üblichen höhersiedenden Kohlenwasserstoffgemische.

Die genannten Lösungsmittel können einzeln oder als Gemische zum Einsatz kommen. Anstelle von Lösungsmitteln ist es auch möglich, Weichmacher zu verwenden, wie z.B. handelsübliche Phosphorsäureester, Phthalsäureester oder Sulfonsäureester.

Blockierte Polyisocyanate, die erfindungsgemäß als Vernetzerkomponente B) eingesetzt werden können, sind bekannt, z.B. in den DE-A 2 342 603, 2 436 872, 2 550 156, 2 612 783, 2 612 784 oder 2 612 785.

Bei den erfindungsgemäßen Verwendungen der erfindungswesentlichen Polyamine A) werden diese gegebenenfalls in Abmischung mit den in der Polyurethantechnologie bekannten organischen Polyhydroxylverbindungen C) als Reaktionspartner für die blockierten Polyisocyanate B) eingesetzt. Bei diesen Polyhydroxylverbindungen kann es sich um die üblichen Polyester-, Polyether-, Polycarbonat-, Polyurethan- oder Polyacrylatpolyole handeln, vorzugsweise die an sich bekannten Polyester- bzw. Polyacrylatpolyole.

Als Abmischkomponente geeignete Polyesterpolyole sind in Lacklösungsmitteln der bereits beispielhaft genannten Art lösliche Polykondensate von organischen Hydroxylverbindungen, wie beispielsweise Monoalkoholen, wie z.B. n-Butanol, 2-Ethylhexanol und Cyclohexanol; Diole, z.B. Ethandiol-1,2, Propandiol-1,2 und-1,3, Butandiol-1,4 und -1,3, Neopentylglykol, Hexandiol-1,6 und 1,4-Cyclohexandimethanol; höherwertige Alkohole, z.B. Glycerin, Trimethylolpropan und Pentaerythrit mit organischen Carbonsäuren wie beispielsweise Monocarbonsäuren, z.B. Benzoesäure, Cyclohexansäure und 2-Ethylhexansäure; Dicarbonsäuren bzw. deren Anhydride, z.B. Phthalsäure(anhydrid), Maleinsäure(anhydrid), Isophthalsäure und Adipinsäure; höherwertige Carbonsäuren, z.B. 1,2,4-Benzoltricarbonsäure(anhydrid). Der Hydroxylgruppengehalt der in Betracht kommenden Polyesterpolyole liegt im allgemeinen zwischen 0,5 und 9 Gew.-% (bezogen auf Festharz).

Als Abmischkomponente geeignete Polyacrylatpolyole sind in Lacklösungsmitteln der bereits beispielhaft genannten Art lösliche Copolymerisate von Hydroxylgruppen aufweisenden Monomeren mit anderen olefinisch ungesättigten Monomeren, wie z.B. Butylacrylat, 2-Ethylhexylacrylat, Methylmethacrylat, Styrol, Acrylsäure und Acrylnitril. Geeignete Hydroxylgruppen aufweisende Monomere sind insbesondere 2-Hydroxyethyl(meth)acrylat und das durch Anlagerung von Propylenoxid an Acrylsäure bzw. Methacrylsäure erhältlich Hydroxypropyl-(meth)acrylat-Isomerengemisch. Der Hydroxylgruppengehalt der in Betracht kommenden Polyacrylatpolyole liegt im allgemeinen zwischen 0,5 und 7 Gew.-% (bezogen auf Festharz).

Bei der erfindungsgemäßen Verwendung der erfindungswesentlichen Polyamine können diese mit organischen Polyhydroxylverbindungen abgemischt werden, im Verhältnis von NH₂- zu OH-Gruppen 1 zu 9, vorzugsweise 1 zu 7. Besonders bevorzugt werden die erfindungswesentlichen Polyamine A) als alleiniger Reaktionspartner für die blockierten Polyisocyanate B) eingesetzt.

Zur Herstellung der in den erfindungsgemäßen Beschichtungsmitteln enthaltenen Bindemittel werden die Polyaminkomponente A) und die blockierte Polyisocyanatkomponente B) in einem Äquivalentverhältnis von blockierten Isocyanatgruppen zu primären Aminogruppen von 0,5:1 bis 8:1, vorzugsweise 0,6:1 bis 6:1 und besonders bevorzugt 0,7:1 bis 4:1 abgemischt. Beim Vermischen der Komponenten wird unterhalb der Temperatur gearbeitet, bei der die blockierten Isocyanatgruppen mit den Aminogruppen reagieren können.

Neben den wesentlichen Bindemittelkomponenten A) und B) können die erfindungsgemäßen Beschichtungsmittel die oben genannten Polyhydroxylkomponenten C) und noch weitere Hilfs- und Zusatzmittel enthalten, z.B. übliche Lösungsmittel mit einem Siedebereich von ≥ 75°C. Die obere Grenze des Siedepunkts bzw. des Siedebereichs der gegebenenfalls eingesetzten Lösungsmittel ist von den jeweiligen Einbrennbedingungen abhängig, d.h. je höher die Einbrenntemperatur, desto höher muß die Siedetemperatur des Lösungsmittels bzw. Lösungsmittelgemisches sein.

Als Lösungsmittel kommen beispielsweise in Betracht aromatische Kohlenwasserstoffe, wie z.B. Toluol, Xylol, Ethylbenzol, Tetralin, Cumol, sowie technische Gemische von Aromaten mit engen Siedeintervallen, z.B. ®Solvesso 100, 150 und 200 der Esso AG, Ketone, wie z.B. Methylisobutylketon, Diisobutylketon, Isophoron und Ester, wie z.B. Ethylacetat, Propylacetat, Isopropylacetat, Butylacetat, Methoxypropylacetat, Ethyl- und Butylglykolacetat, Hexylacetat, Bernsteinsäuredimethylester, Glutarsäuredimethylester, Adipinsäuredimethylester oder Gemische derartiger Lösungsmittel.

Weitere gegebenenfalls mitzuverwendende Hilfs- und Zusatzmittel sind z.B. Weichmacher wie Trikresylphosphat oder Phthalsäurediester, Chlorparaffine, Pigmente und Füllstoffe wie Titandioxid, Bariumsulfat, Kreide, Ruß; Katalysatoren wie z.B. N,N-Dimethylbenzylamin, N-Methylmorpholin, Zinn-II- und Zink-IIoctoat oder Dibutylzinndilaurat; Verlaufsmittel; Verdickungsmittel; Stabilisatoren wie substituierte Phenole; organofunktionelle Silane als Haftvermittler sowie Lichtschutzmittel.

Lichtschutzmittel sind beispielsweise sterisch gehinderte Amine, wie sie in der DE-A 2 417 353 (= US-A 4 123 418 und US-A 4 110 304) und der DE-A 2 456 864 (= US-A 3 993 655 und US-A 4 221 701) beschrieben sind. Besonders bevorzugte Verbindungen sind: Bis-(1,2,2,6,6-pentamethyl-piperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester. Die erfindungsgemäßen Beschichtungsmittel stellen bei Raumtemperatur flüssige Gemische mit sehr guter Lagerstabilität dar.

Zur Herstellung von Überzügen unter Verwendung der erfindungsgemäßen Beschichtungsmittel werden diese nach an sich bekannten Methoden, beispielsweise durch Spritzen, Tauchen, Fluten oder mit Hilfe von Walzen oder Rakeln auf beliebige hitzeresistente Substrate ein- oder mehrschichtig aufgetragen. Die erfindungsgemäßen Beschichtungsmittel eignen sich zur Herstellung von Überzügen auf Metall, Kunststoffen, Holz, oder Glas. Besonders gut geeignet sind die erfindungsgemäßen Beschichtungsmittel zur Herstellung von Überzügen auf Fahrzeugkarosserieteilen, insbesondere als Füller und Decklack.

Ein weiteres bevorzugtes Einsatzgebiet ist die Herstellung von Überzügen auf Aluminium und Stahlbändern, die nach dem automatischen Bandlackierverfahren beschichtet werden und als Fahrzeugkarosserien, Gehäuse für Maschinen und Haushaltsgeräte, Verkleidungsbleche, Fässer oder Container Verwendung finden.

Die zu beschichtenden Substrate können vor der Beschichtung mit geeigneten Grundierungen versehen sein. Bei der erfindungsgemäßen Verwendung wird die Menge der eingesetzten erfindungsgemäßen Beschichtungsmittel im allgemeinen so bemessen, daß Trockenschichtdicken von ca. 5 bis 80 µm, vorzugsweise 10 bis 60 µm resultieren. Es ist jedoch auch möglich, wesentlich dickere Schichten herzustellen.

Die Aushärtung der erfindungsgemäßen Lacke und Beschichtungen erfolgt je nach Anwendung in einem Temperaturbereich von 90 - 400°C, vorzugsweise zwischen 100 - 350°C und besonders bevorzugt 110 - 160°C und in einer Zeit von 45 bis 0,25 Minuten, vorzugsweise von 35 bis 0,50 Minuten.

Der besondere Vorteil der erfindungsgemäßen Bindemittelkombinationen im Vergleich zu herkömmlichen Polyurethanbeschichtungsmitteln liegt in den niedrigeren Einbrenntemperaturen bzw. kürzeren Einbrennzeiten zur Erzielung lösungsmittelbeständiger Beschichtungen, wobei keine Katalysatoren erforderlich sind.

Die ausgehärteten Überzüge weisen hervorragende lacktechnische Eigenschaften auf. Sie finden vor allem Anwendung in der Coil-Coating-Lackierung für außenbewitterungsbeständige Ein- und Zweischicht-Lackierungen sowie im Fahrzeugbereich als Füller und Decklackierung.

### Beispiele

Viskositäten wurden nach DIN 53 019 bestimmt.

Alle %-Angaben beziehen sich auf das Gewicht.

### I. Allgemeine Herstellvorschrift für die ungesättigten Oligoester a)

Maleinsäureanhydrid und das entsprechende Diol oder Polyol werden in einen Dreihalskolben mit Rührer, Rückflußfühler, Thermometer und Stickstoffeinleitung eingewogen und bei 80 bis 150°C so lange gerührt, bis die Anhydridbande bei ca. 1845 cm⁻¹ im IR-Spektrum nahezu oder vollständig verschwunden ist. Dann werden der entsprechende Monoalkohol, ein Veresterungskatalysator und ein Wasserschleppmittel zugegeben. Die Zugabe erfolgt bei einer Temperatur, die unterhalb der Siedetemperatur des Monoalkohols und des Schleppmittels liegt. Anschließend wird so lange am Wasserabscheider gekocht, bis die theoretische Wassermenge abgeschieden ist, bzw. bis sich kein Wasser mehr abscheidet. Danach werden das Schleppmittel und gegebenenfalls überschüssiger Monoalkohol im Vakuum vollständig abdestilliert. Der ungesättigte Oligoester bleibt als farblose bis leicht gelblich gefärbte, niedrigviskose Flüssigkeit zurück. In der nachfolgenden Tabelle 1 sind die Zusammensetzungen und die Kenndaten der erhaltenen ungesättigten Oligoester angegeben.

**Tabelle 1**

| Zusammensetzungen und Kenndaten der ungesättigten Oligoester a), Einwaagen in g. | | | | | | | |
|---|---|---|---|---|---|---|---|
| **Beispiel** | 1 | 2 | 3 | 4 | 5 | 6 | 7 |
| Maleinsäureanhydrid | 196 | 196 | 196 | 735 | 882 | 392 | 392 |
| Butandiol-1,4 | - | - | 90 | - | - | - | - |
| Neopentylglykol | - | 104 | - | - | - | - | - |
| Hexandiol-1,6 | 118 | - | - | 442 | - | - | 118 |
| Polyethylenglykol MG:300 | - | - | - | - | - | 600 | 300 |
| Trimethylolpropan | - | - | - | - | 402 | - | - |
| n-Butanol | 259 | 178 | 178 | 666 | 799 | 356 | 356 |
| p-Toluolsulfonsäure | - | 4,8 | 2,3 | 4,6 | 7,4 | 6,4 | 5,5 |
| Schwefelsäure, konz. | 3,6 | - | - | - | - | - | - |
| Toluol | 135 | - | - | - | - | - | - |
| Cyclohexan | - | 135 | 100 | 200 | 250 | 400 | 400 |
| Säurezahl (mg KOH/g) | 2,4 | 2,9 | 2,3 | 1,3 | 2,3 | 9,0 | 4,5 |
| Viskosität bei 23°C, mPa.s (DIN 53 019) | 69 | 72 | 54 | 61 | 324 | 117 | 83 |

### II. Allgemeine Herstellvorschrift der erfindungsgemäßen Polyamine A)

In einem 3-1-Vierhalskolben mit Rührer, Rückflußkühler, Thermometer und Stickstoffeinleitung wird Teil I vorgelegt und auf 60 - 80°C aufgeheizt. Anschließend wird Teil II innerhalb 1 Stunde zudosiert. Falls es sich bei Teil II um ein ungesättigtes Acrylat b) handelt, wird 1 Stunde bei 80°C gerührt, anschließend Teil III in 1 Stunde zudosiert und dann so lange bei 80°C gerührt, bis der theoretische Feststoffgehalt erreicht ist. Falls es sich bei Teil II um einen ungesättigten Oligoester a) handelt, wird so lange bei 80°C gerührt, bis der theoretische Feststoffgehalt erreicht ist und gegebenenfalls anschließend, falls vorgesehen, Teil III innerhalb 1 Stunde zudosiert und dann so lange bei 80°C gerührt, bis der theoretische Feststoffgehalt erreicht ist. Danach wird auf Raumtemperatur abgekühlt, wobei die Polyamine A) als schwach gelblich gefärbte Lösungen erhalten werden.

In Tabelle 2 sind die Zusammensetzung und in Tabelle 3 die Kenndaten der erhaltenen erfindungsgemäßen Polyamine angegeben.

**Tabelle 2**

| Zusammensetzungen der erfindungsgemäßen Polyamine A), Einwaagen in g | | | | | | | |
|---|---|---|---|---|---|---|---|
| Polyamine | A1 | A2 | A3 | A4 | A5 | A6 | A7 |
| Teil I | | | | | | | |
| Butylacetat | 600 | 600 | 600 | 600 | 600 | 600 | 600 |
| Isophorondiamin | - | 640 | - | 512 | 596 | 555 | 591 |
| 4,4'-Diaminodicyclohexylmethan | 586 | - | 713 | - | - | - | - |

| Teil II | | | | | | | |
|---|---|---|---|---|---|---|---|
| Trimethylolpropantriacrylat | - | 318 | 287 | - | 207 | 277 | 295 |
| ungesättigter Oligoester aus Beispiel Nr. 5 | 475 | - | - | 514 | - | - | - |

| Teil III ungesättigte Oligoester aus Beispiel | | | | | | | |
|---|---|---|---|---|---|---|---|
| Nr.1 | 339 | - | - | - | - | - | - |
| Nr.2 | - | 442 | 400 | - | - | - | - |
| Nr.3 | - | - | - | 374 | - | - | - |
| Nr.4 | - | - | - | - | 597 | - | - |
| Nr.6 | - | - | - | - | - | 568 | - |
| Nr.7 | - | - | - | - | - | - | 514 |

**Tabelle 3**

| Kenndaten der erfindungsgemäßen Polyamine A) | | | | | | | |
|---|---|---|---|---|---|---|---|
| **Polyamine** | **A1** | **A2** | **A3** | **A4** | **A5** | **A6** | **A7** |
| Festgehalt % | 69,5 | 69,8 | 69,7 | 70,6 | 69,5 | 70,4 | 68,9 |
| Viskosität bei 23°C, mPa.s (DIN 53 019) | 2354 | 915 | 1214 | 2110 | 618 | 1003 | 1126 |
| Aminzahl, mg KOH/g | 155 | 210 | 189 | 165 | 221 | 186 | 200 |
| Equivalentgewicht, g/mol NH₂ + NH | 361 | 267 | 296 | 339 | 254 | 301 | 280 |
| Eequivalentgewicht, g/mol NH₂ | 1.264 | 934 | 1035 | 1186 | 889 | 1054 | 980 |

### Vergleichsbeispiel 1 (V1)

Um die Eignung von Amino- und Amidgruppen enthaltenden Polyesterpolyolen gemäß EP-A 273 243 als Bindemittelkomponente in Polyurethanbeschichtungen zu prüfen, wurde Beispiel 1 der EP-A 273 243 exakt nachgestellt. Es wurde ein rotbraunes Produkt mit einer Viskosität bei 20°C von 53.742 mPa.s erhalten. Das Harz hatte einen Gesamtstickstoffgehalt von 3,6% und einen basischen Stickstoffgehalt von 1,43% (Equivalentgewicht ca. 1049 g/mol basischer Stickstoff).

### Vergleichsbeispiel 2 (V2)

Um die Reaktivität der erfindungsgemäßen Polyamine mit der von Polyesterpolyolen zu vergleichen, wurde ein handelsübliches Polyesterpolyol ausgewählt. Es handelt sich um Alkynol 1665, ein Handelsprodukt der Bayer AG, das in Kombination mit blockierten Polyisocyanaten zur Herstellung von Einbrennlacken, wie Grundierung, Automobilfüllern sowie Coil-Coating- und allgemeinen Industrielacken besonders geeignet ist. Das Harz ist 65%ig gelöst in ®Solvesso 100/Isobutanol 31,5:3,5 (Viskosität ca. 2.700 mPa.s) und hat einen Hydroxylgruppengehalt von ca. 1,7% (bez. auf Lieferform), das Equivalentgewicht beträgt ca. 1000 g/mol OH-Gruppe

### III. Herstellung der erfindungsgemäßen Beschichtungsmittel

Die Polyamine A1 bis A7 sowie die Bindemittel aus den Vergleichsbeispielen V1 und V2 werden mit blockierten Polyisocyanaten, die nachfolgend näher charakterisiert sind, so gemischt, daß ein Verhältnis von NH₂- bzw. OH-Gruppen zu blockierten Isocyanatgruppen von 1:1 vorliegt. Die Mischungen werden durch Zugabe eines Lösungsgemisches auf eine Viskosität von ca. 30s Auslaufzeit aus einem DIN-4-mm-Becher (DIN 53211) eingestellt und anschließend mit einem Filmzieher auf Prüfbleche aufgezogen, wobei die Naßfilmstärke ca. 100 µm beträgt. Nach 5 Minuten Ablüften bei Raumtemperatur werden die beschichteten Prüfbleche 30 Minuten bei 130°C bzw. 140°C gelagert. Danach werden sie auf Raumtemperatur abgekühlt. Man erhält auf diese Weise Lackfilme, deren optisches und mechanisches Qualitätsniveau sowie die Lösemittelbeständigkeit als Grad der Vernetzung nachfolgend beurteilt werden.

Die Lösungsmittelbeständigkeit wird durch 1-minütiges Auflegen eines mit einem Lösungsmittel getränkten Wattebausches geprüft, wobei als Lösungsmittel Xylol, Methoxypropylacetat (MPA), Ethylacetat und Aceton zur Anwendung kommen. Nach der Einwirkung wird der Lackfilm beurteilt, wobei die Benotung 0 bedeutet, daß der Lackfilm völlig in Ordnung ist und die Benotung 5 bedeutet, daß der Lackfilm an der belasteten Stelle völlig aufgelöst ist.

Die mechanische Lackeigenschaften werden durch die Pendeldämpfung nach König (DIN 53 157), die ein Maß für die Lackfilmhärte ist, und die Erichsentiefung (DIN ISO 1520), die ein Maß für die Flexibilität eines Lackfilms ist, charakterisiert.

In der nachfolgenden Tabelle 4 sind die Zusammensetzungen der erfindungsgemäßen Bindemittelkombinationen 1 bis 7 und der Vergleichsbeispiele V8 bis V10 sowie die Prüfergebnisse der durchgeführten Prüfungen aufgeführt.

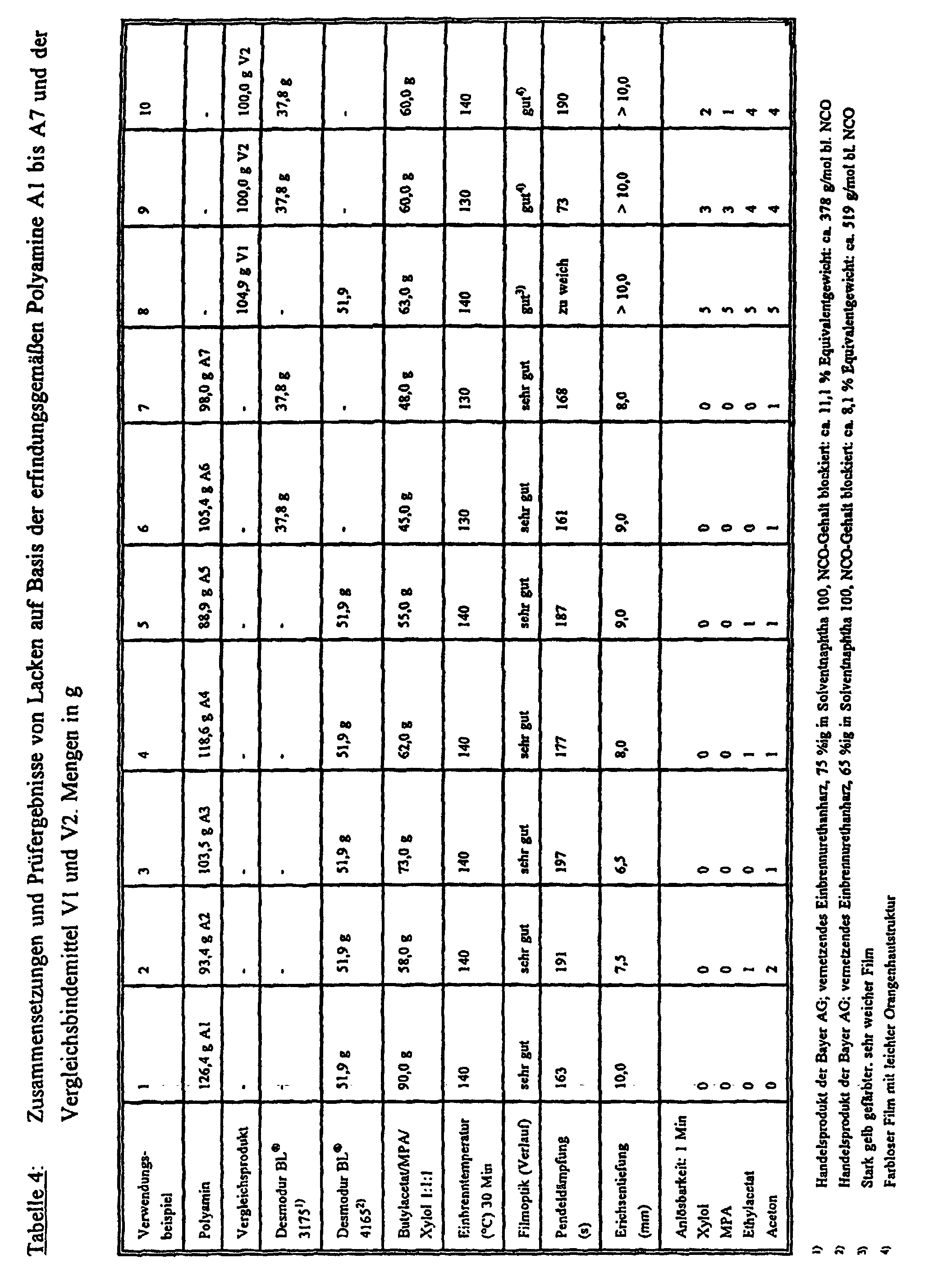

### Diskussion der Resultate

Mit den Lacken auf Basis der erfindungsgemäßen Polyamine A1 bis A7 können hochglänzende, sehr gut verlaufende Beschichtungen hergestellt werden, die bei Einbrennbedingungen von sowohl 30 Minuten 130°C als auch 30 Minuten 140°C eine hohe Härte und eine gute Flexibilität aufweisen. Die Beständigkeit gegen diverse Lösungsmittel ist durchweg sehr gut, manchmal nur gut.

Der Lack auf Basis des Vergleichsbeispiels V1 liefert nach 30 Minuten 140°C eine stark gelbe, sehr weiche Beschichtung, die gegenüber den angewandten Lösungsmitteln keinerlei Beständigkeit aufweist und sofort an- bzw. aufgelöst wird.

Der Lack auf Basis des Vergleichsbeispiels V2 liefert bei 130°C (Beispiel 9) eine Beschichtung mit unzureichender Filmhärte und schlechter Lösungsmittelbeständigkeit. Bei einer Einbrenntemperatur von 140°C erhält man eine Beschichtung mit sehr guter Filmhärte aber nicht ausreichender Lösungsmittelbeständigkeit.

## Patentansprüche

1. Polyamine, die durch Umsetzung von
a) ungesättigten Oligoestern die entweder durch Umesterung von Malein- bzw. Fumarsäuredi(cyclo)allylestern mit Di-, Tri- oder Tetraolen oder durch Veresterung von Maleinsäureanhydrid, Malein- oder Fumarsäure mit Di-, Tri- oder Tetraolen und Monoalkoholen hergestellt werden, mit im statistischen Mittel 2 bis 4 Doppelbindungen pro Molekül,
b) gegebenenfalls weiteren als Michael-Akzeptor geeigneten ungesättigten Verbindungen mit im statistischen Mittel 1 bis 4 Doppelbindungen pro Molekül,
c) (cyclo)aliphatischen Diaminen mit zwei primären Aminogruppen und
d) gegebenenfalls weiteren als Michael-Donator geeigneten aminofunktionellen Verbindungen
hergestellt werden.

2. Polyamine gemäß Anspruch 1, **dadurch gekennzeichnet, daß** sie aus den Ausgangskomponenten a) bis c) hergestellt sind und im statistischen Mittel 1 bis 6 primäre Aminogruppen, 3 bis 12 sekundäre Aminogruppen, einen Gehalt an primären Aminogruppen von 0,39 bis 6,53 % und einen Gehalt an sekundären Aminogruppen von 1,82 bis 10,20 % aufweisen.

3. Polyamine gemäß Anspruch 1, **dadurch gekennzeichnet, daß** sie aus den Ausgangskomponenten a) und c) hergestellt sind und im statistischen Mittel 2 bis 6 primäre Aminogruppen, 2 bis 12 sekundäre Aminogruppen, einen Gehalt an primären Aminogruppen von 0,73 bis 7,88 % und einen Gehalt an sekundären Aminogruppen von 1,37 bis 7,39 % aufweisen.

4. Polyamine gemäß Anspruch 1, **dadurch gekennzeichnet, daß** es sich bei der Ausgangskomponente a) um ungesättigte Oligoester auf Basis von Maleinsäureanhydrid, Diolen mit einem Molekulargewicht von < 1.000 und Monoalkoholen mit 1 bis 18 Kohlenstoffatomen im Alkylrest handelt, bei der Ausgangskomponente b) um Ester der Acryl- und/oder Methacrylsäure mit 2 bis 4 Doppelbindungen pro Molekül handelt und bei der Ausgangskomponente c) um (cyclo)aliphatische Diamine mit zwei primären Aminogruppen der allgemeinen Formel NH₂-R-NH₂, in der R für einen C₂-C₂₄-aliphatischen Rest oder C₃-C₂₄-cycloaliphatischen Rest handelt.

5. Polyamine gemäß Anspruch 1, **dadurch gekennzeichnet, daß** es sich bei der Ausgangskomponente b) um Trimethylolpropantriacrylat handelt.

6. Polyamine gemäß Anspruch 1, **dadurch gekennzeichnet, daß** es sich bei der Ausgangskomponente a) um ungesättigte Oligoester auf Basis von Maleinsäureanhydrid, Di-, Tri- und/oder Tetraolen mit einem Molekulargewicht < 1.000 und Monoalkoholen mit 1 bis 18 Kohlenstoffatomen im Alkylrest handelt, und daß es sich bei der Ausgangskomponente c) um (cyclo)-aliphatische Diamine mit zwei primären Aminogruppen der allgemeinen Formel NH₂-R-NH₂, in der R für einen C₂-C₂₄-aliphatischen Rest oder C₃-C₂₄-cycloaliphatischen Rest handelt.

7. Polyamine gemäß den Anspruch 1, **dadurch gekennzeichnet, daß** als Ausgangskomponente c) Isophorondiamin verwendet wurde.

8. Bindemittelkombination, bestehend aus Polyaminen gemäß Anspruch 1 und blockierten Polyisocyanaten.

9. Verwendung der Bindemittelkombinationen gemäß Anspruch 8 zur Herstellung von hitzehärtbaren Lacken und Beschichtungen.

10. Verwendung der Bindemittelkombination nach Anspruch 8 für Automobilfüller und Automobildecklacke.

## Claims

1. Polyamines which are prepared by reaction of
a) unsaturated oligoesters , which are prepared either by transesterification of maleic or fumaric acid di(cyclo)alkyl esters with di-, tri- or tetraols or by esterification of maleic anhydride, maleic acid or fumaric acid with di-, tri- or tetraols and monoalcohols, with a statistical average of 2 to 4 double bonds per molecule,
b) optionally other unsaturated compounds suitable as Michael acceptors with a statistical average of 1 to 4 double bonds per molecule,
c) (cyclo)aliphatic diamines with two primary amino groups and
d) optionally other aminofunctional compounds suitable as Michael donors.

2. Polyamines according to claim 1, **characterised in that** they are prepared from the starting components a) to c) and have a statistical average of 1 to 6 primary amino groups, 3 to 12 secondary amino groups, a primary amino group content of 0.39 to 6.53% and a secondary amino group content of 1.82 to 10.20%.

3. Polyamines according to claim 1, **characterised in that** they are prepared from the starting components a) and c) and have a statistical average of 2 to 6 primary amino groups, 2 to 12 secondary amino groups, a primary amino group content of 0.73 to 7.88% and a secondary amino group content of 1.37 to 7.39%.

4. Polyamines according to claim 1, **characterised in that** the starting components a) are unsaturated oligoesters based on maleic anhydride, diols with a molecular weight of <1,000 and monoalcohols with 1 to 18 carbon atoms in the alkyl group, the starting components b) are esters of acrylic and/or methacrylic acid with 2 to 4 double bonds per molecule and the starting components c) are (cyclo)aliphatic diamines with two primary amino groups having the general formula NH₂-R-NH₂, in which R means a C₂-C₂₄ aliphatic group or C₃-C₂₄ cycloaliphatic group.

5. Polyamines according to claim 1, **characterised in that** the starting component b) is trimethylolpropane triacrylate.

6. Polyamines according to claim 1, **characterised in that** the starting components a) are unsaturated oligoesters based on maleic anhydride, di-, tri- and/or tetraols with a molecular weight of <1,000 and monoalcohols with 1 to 18 carbon atoms in the alkyl group, and **in that** the starting components c) are (cyclo)aliphatic diamines with two primary amino groups having the general formula NH₂-R-NH₂ in which R means a C₂-C₂₄ aliphatic group or C₃-C₂₄ cycloaliphatic group.

7. Polyamines according to claim 1, **characterised in that** isophorone diamine was used as starting component c).

8. A binder combination comprising polyamines according to claim 1 and blocked polyisocyanates.

9. The use of the binder combinations according to claim 8 for the preparation of heat-curable lacquers and coatings.

10. The use of the binder combination according to claim 8 for automobile surfacers and automobile top coat lacquers.

## Revendications

1. Polyamines que l'on prépare par mise en réaction de
a) des oligoesters insaturés que l'on prépare soit par transestérification d'esters di-(cyclo)alkyliques de l'acide maléique respectivement fumarique avec des diols, des triols ou des tétraols, soit par estérification d'anhydride maléique, d'acide maléique ou d'acide fumarique avec des diols, des triols ou des tétraols et des monoalcools, et qui contiennent, dans la moyenne statistique, de 2 à 4 liaisons doubles par molécule,
b) le cas échéant, d'autres composés insaturés appropriés à titre d'accepteurs de Michaël qui contiennent, dans la moyenne statistique, de 1 à 4 liaisons doubles par molécule,
c) des diamines (cyclo)aliphatiques comprenant deux groupes amino primaires, et
d) le cas échéant, d'autres composés amino-fonctionnels appropriés à titre de donneurs de Michaël.

2. Polyamines selon la revendication 1, **caractérisées en ce qu'**on les prépare à partir des composants de départ a) à c) et **en ce qu'**elles présentent, dans la moyenne statistique, de 1 à 6 groupes amino primaires, de 3 à 12 groupes amino secondaires, une teneur en groupes amino primaires de 0,39 à 6,53 % et une teneur en groupes amino secondaires de 1,82 à 10,20 %.

3. Polyamines selon la revendication 1, **caractérisées en ce qu'**on les prépare à partir des composants de départ a) et c) et **en ce qu'**elles présentent, dans la moyenne statistique, de 2 à 6 groupes amino primaires, de 2 à 12 groupes amino secondaires, une teneur en groupes amino primaires de 0,73 à 7,88 % et une teneur en groupes amino secondaires de 1,37 à 7,39 %.

4. Polyamines selon la revendication 1, **caractérisées en ce que**, en ce qui concerne le composant de départ a), il s'agit d'oligoesters insaturés à base d'anhydride maléique, de diols possédant, un poids moléculaire < 1.000 et de monoalcools contenant de 1 à 18 atomes de carbone dans le radical alkyle ; en ce qui concerne le composant de départ b), il s'agit d'esters de l'acide acrylique et/ou de l'acide méthacrylique contenant de 2 à 4 liaisons doubles par molécule et, en ce qui concerne le composant de départ c), il s'agit de diamines (cyclo)aliphatiques comprenant deux groupes amino primaires répondant à la formule générale NH₂-R-NH₂ dans laquelle R représente un radical aliphatique en C₂-C₂₄ ou un radical cycloaliphatique en C₃-C₂₄.

5. Polyamines selon la revendication 1, **caractérisées en ce que**, en ce qui concerne le composant de départ b), il s'agit du triacrylate de triméthylolpropane.

6. Polyamines selon la revendication 1, **caractérisées en ce que**, en ce qui concerne le composant de départ a), il s'agit d'oligoesters insaturés à base d'anhydride maléique, de diols, de triols et/ou de tétraols possédant un poids moléculaire < 1.000 et de monoalcools contenant de 1 à 18 atomes de carbone dans le radical alkyle ; et **en ce que**, en ce qui concerne le composant de départ c), il s'agit de diamines (cyclo)-aliphatiques comprenant deux groupes amino primaires répondant à la formule générale NH₂-R-NH₂ dans laquelle R représente un radical aliphatique en C₂-C₂₄ ou un radical cycloaliphatique en C₃-C₂₄.

7. Polyamines selon la revendication 1, **caractérisées en ce qu'**on utilise de l'isophoronediamine comme composant de départ c).

8. Combinaison de liants, constituée par des polyamines selon la revendication 1 et par des polyisocyanates bloqués.

9. Utilisation des combinaisons de liants selon la revendication 8, pour la préparation de laques, de vernis ou de peintures et d'enductions durcissables à la chaleur.

10. Utilisation de la composition de liants selon la revendication 8, pour des matières de charge et pour des laques, des vernis ou des peintures de finition dans le domaine de la construction automobile.
